# EUROPEAN PATENT APPLICATION

(11) **EP 3 957 519 A1**
(43) Date of publication of application: **23.02.2022**
(21) Application number: 21782427.5
(22) Date of filing: 01.06.2021
(51) Int. Cl.: B60N 2/00, B60W 50/08, H04W 4/48, H04W 4/80

(54) **VEHICLE INTERACTION METHOD AND VEHICLE**

(30) Priority: 17.06.2020 CN 202010556096
(71) Applicant: Guangzhou Xiaopeng Motors Technology Co., Ltd., Guangzhou, Guangdong 510000 (CN)
(72) Inventor: QIAN, Wen, Guangzhou Guangdong 510000 (CN)
(74) Representative: DREISS Patentanwälte PartG mbB
(86) International application number: PCT/CN2021/097730
(87) International publication number: WO 2021/254141

(57) **Abstract**

The embodiments of the present disclosure provide a vehicle interaction method and a vehicle. The vehicle interaction method is applied in the vehicle and includes: determining a distance between a Bluetooth device and a reference object corresponding to a preset seat in response to detecting that a person is sitting in the preset seat; determining the Bluetooth device as a target Bluetooth device when the distance between the Bluetooth device and the reference object is smaller than a preset threshold; and configuring the target Bluetooth device with a permission of a vehicle interaction function. Once a user enters the vehicle cockpit and sits in the preset seat, a Bluetooth device possessed by the user can be connected to the vehicle through an in-vehicle Bluetooth module, and the Bluetooth device possessed by the user can be accordingly configured with the permission of the vehicle interaction function, so as to allow the user to interact with the vehicle and provide the user with a good vehicle interaction experience.

## Description

This application claims priority to Chinese Patent Application No. 202010556096.5, filed with China National Intellectual Property Administration on June 17, 2020, and titled "VEHICLE INTERACTION METHOD AND VEHICLE", which is incorporated herein by reference in its entirety.

### FIELD

The present disclosure relates to the technical field of vehicles, and particularly, to a vehicle interaction method and a vehicle.

### BACKGROUND

Currently, an in-vehicle Bluetooth module can usually be provided in a vehicle. The user in a vehicle cockpit can connect a Bluetooth device to the vehicle through the in-vehicle Bluetooth module to realize vehicle interaction functions such as playing music and answering calls through in-vehicle devices. However, it is usually necessary for the user to actively set up a Bluetooth connection before realizing the interaction between the Bluetooth device and the vehicle. In addition, for different users, the functions they hope to achieve by connecting the Bluetooth device to the vehicle through the in-vehicle Bluetooth module may not be the same, and thus the user may also need to set the vehicle interaction function between the Bluetooth device and the vehicle, resulting in a relatively complicated setup process for connecting the Bluetooth device to the vehicle through the in-vehicle Bluetooth module.

### SUMMARY

In view of the above problems, embodiments of the present disclosure provide a vehicle interaction method and a vehicle, in order to overcome the above problems or at least partially solve the above problems.

In order to solve the above problems, the embodiments of the present disclosure provide a vehicle interaction method. The method includes: determining a distance between a Bluetooth device and a reference object corresponding to a preset seat in response to detecting that a person is sitting in the preset seat; determining the Bluetooth device as a target Bluetooth device when the distance between the Bluetooth device and the reference object is smaller than a preset threshold; and configuring the target Bluetooth device with a permission of a vehicle interaction function.

Optionally, the method further includes: detecting whether a person is sitting in the preset seat by using any one of detection manners including a seat pressure detection, a seat belt insertion-removal detection, a headrest contact detection, and an image recognition detection.

Optionally, the determining the distance between the Bluetooth device and the reference object corresponding to the preset seat in response to detecting that the person is sitting in the preset seat includes: detecting the quantity of Bluetooth devices in the vehicle in response to detecting that the person is sitting in the preset seat; and when the quantity of Bluetooth devices in the vehicle is greater than one, determining the distance between each of the Bluetooth devices and the reference object corresponding to the preset seat.

Optionally, the determining the Bluetooth device as the target Bluetooth device when the distance between the Bluetooth device and the reference object is smaller than the preset threshold includes: determining whether there is more than one Bluetooth device whose distance from the reference object is smaller than the preset threshold; when there is more than one Bluetooth device whose distance from the reference object is smaller than the preset threshold, obtaining, by using a preset image obtaining device, biometric identification information of a user located in the preset seat; generating an unlock request by using the biometric identification information; transmitting the unlock request to the more than one Bluetooth device whose distance from the reference object is smaller than the preset threshold; and determining one of the more than one Bluetooth device that is successfully unlocked in response to the unlock request as the target Bluetooth device.

Optionally, the vehicle interaction function includes an in-vehicle call function, and the method further includes, determining whether there is a person sitting in the preset seat in response to receiving a call request from the target Bluetooth device; and when there is no person sitting in the preset seat, performing an incoming call reminder operation. The incoming call reminder operation includes playing a preset sound by using a preset audio player, and/or controlling a preset car lamp to flash.

Optionally, the vehicle interaction function includes a message push function, and the method further includes receiving a push message from the target Bluetooth device, and displaying the push message on a preset in-vehicle display screen.

Optionally, the vehicle interaction function includes a vehicle control function, and the method further includes: receiving vehicle control information from the target Bluetooth device; and controlling a vehicle system function by using the vehicle control information.

Optionally, the method further includes: obtaining an image of a person nearby the vehicle; determining whether the image of the person matches a user image, in which the user image is an image of a user corresponding to the target Bluetooth device, and the user image has a corresponding relation with device identification information of the target Bluetooth device; and when the image of the person matches the user image, searching for the target Bluetooth device by using the device identification information corresponding to the user image, and configuring the target Bluetooth device with the permission of the vehicle interaction function.

The embodiments of the present disclosure further provide a vehicle. The vehicle includes: a distance determining module configured to determine a distance between a Bluetooth device and a reference object corresponding to a preset seat in response to detecting that a person is sitting in the preset seat; a target Bluetooth device determining module configured to determine the Bluetooth device as a target Bluetooth device when the distance between the Bluetooth device and the reference object is smaller than a preset threshold; and a permission configuring module configured to configure the target Bluetooth device with a permission of a vehicle interaction function.

Optionally, the vehicle further includes a detecting module configured to detect whether the person is sitting in the preset seat by using any one of detection manners including a seat pressure detection, a seat belt insertion-removal detection, a headrest contact detection, and an image recognition detection.

Optionally, the distance determining module includes: a quantity detecting sub-module configured to detect the quantity of Bluetooth devices in the vehicle in response to detecting that the person is sitting in the preset seat; and a distance determining sub-module configured to determine, when the quantity of Bluetooth devices in the vehicle is greater than one, the distance between each of the Bluetooth devices and the reference object corresponding to the preset seat.

Optionally, the target Bluetooth device determining module includes: a device quantity determining sub-module configured to determine whether there is more than one Bluetooth device whose distance from the reference object is smaller than the preset threshold; a recognition image obtaining sub-module configured to obtain, when there is more than one Bluetooth device whose distance from the reference object is smaller than the preset threshold, biometric identification information of a user located in the preset seat; a request generating sub-module configured to generate an unlock request by using the biometric identification information; a request transmitting sub-module configured to transmit the unlock request to the more than one Bluetooth device whose distance from the reference object is smaller than the preset threshold; and a target Bluetooth device determining sub-module configured to determine one of the more than one Bluetooth device, which is successfully unlocked in response to the unlock request, as the target Bluetooth device.

Optionally, the vehicle interaction function includes an in-vehicle call function, and the vehicle further includes: a call request receiving module configured to determine whether there is a person sitting in the preset seat in response to receiving a call request from the target Bluetooth device; and an incoming call reminder module configured to perform an incoming call reminder operation when there is no person sitting in the preset seat. The incoming call reminder operation includes playing a preset sound by using a preset audio player, and/or controlling a preset car lamp to flash.

Optionally, the vehicle interaction function includes a message push function, and the vehicle further includes: a message push module configured to receive a push message from the target Bluetooth device, and display the push message on a preset in-vehicle display screen.

Optionally, the vehicle interaction function includes a vehicle control function, and the vehicle further includes: a control information receiving module configured to receive vehicle control information from the target Bluetooth device; and an in-vehicle control module configured to control a vehicle system function by using the vehicle control information.

Optionally, the vehicle further includes: a personnel image obtaining module configured to obtain an image of a person nearby the vehicle using a preset image obtaining device; an image matching module configured to determine whether the image of the person matches a user image, in which the user image is an image of a user corresponding to the target Bluetooth device, and the user image has a corresponding relation with device identification information of the target Bluetooth device; and a searching module configured to search for the target Bluetooth device by using the device identification information corresponding to the user image and configure the target Bluetooth device with the permission of the vehicle interaction function when the image of the person matches the user image.

The embodiments of the present disclosure further provide a vehicle, including one or more processors, and one or more machine-readable media having instructions stored thereon. The instructions when executed by the one or more processors, cause the vehicle to implement the method according to any of the embodiments of the present disclosure.

The embodiments of the present disclosure further provide one or more machine-readable media having instructions stored thereon. The instructions when executed by one or more processors, cause the one or more processors to implement the method according to any of the embodiments of the present disclosure.

The embodiments of the present disclosure have the following advantages. Through the vehicle interaction method according to the embodiments of the present disclosure, when it is detected that a person is sitting on a preset seat, the distance between a Bluetooth device and a reference object corresponding to the preset seat is determined. When the distance between a Bluetooth device and the reference object is smaller than the preset threshold, the Bluetooth device is determined as a target Bluetooth device and the target Bluetooth device is configured with a permission of a vehicle interaction function. In this way, once a user enters the vehicle cockpit and sits in the preset seat, a Bluetooth device possessed by the user can be immediately connected to the vehicle through the in-vehicle Bluetooth module, and the Bluetooth device possessed by the user can be accordingly configured with the permission of the vehicle interaction function, so as to allow the user to interact with the vehicle and provide the user with a good vehicle interaction experience.

### BRIEF DESCRIPTION OF DRAWINGS

FIG. 1 is a flowchart of steps of a vehicle interaction method according to an embodiment of the present disclosure;
FIG. 2 is a flowchart of steps of a vehicle interaction method according to another embodiment of the present disclosure;
FIG. 3 is a schematic diagram of a vehicle cockpit according to an embodiment of the present disclosure; and
FIG. 4 is a structural block diagram of a vehicle according to an embodiment of the present disclosure.

### DESCRIPTION OF EMBODIMENTS

The present disclosure is further described in detail below in conjunction with the accompanying drawings and specific embodiments, in order to make the above objects, features and advantages of the present disclosure obvious and easy to understand.

In recent years, the development of the vehicle industry, which is driven mainly by products and technologies on the supply side, has been gradually transformed and is now driven by the continually increasing users' needs, and the users' perception of vehicles has gradually changed from a simple transport means to a living space. A cockpit, as a space for users to experience directly, is improved in terms of the high intelligence, allowing the cockpit to be the core of human-vehicle interaction experience and to provide users with better vehicle riding experience.

An intelligent cockpit electronic system may refer to a whole system consisting of a center controller, a full liquid crystal instrument, a head-up display, an entertainment system, an intelligent speaker, a vehicle networking module, a streaming media rear mirror, teleprocessing system, etc.

An intelligent cockpit system may refer to a system that takes a cockpit area controller as the center to implement functions of the above-mentioned intelligent cockpit electronic system on a unified software and hardware platform, in coordination with intelligent interaction, intelligent scenarios, and personalized services. The intelligent cockpit system can form the basis for human-vehicle interaction and the interconnection of vehicles with the outside world.

Generally, the usage scenarios of the intelligent cockpit system can cover all scenarios in which the user uses the vehicle, specifically including temporal scenarios such as prior to user's use of the vehicle, during the user's use of the vehicle, and after user's use of the vehicle; or spatial scenarios of the driver, co-driver, rear passengers, and related people or objects outside the vehicle.

The human-machine interaction in the intelligent cockpit, compared with the past command-based interaction, can be combined with the usage scenarios of the vehicle and the user to achieve intelligent effects that are more in line with user demands based on the basic technologies such as image recognition, voice recognition, and environmental perception.

In the embodiments of the present disclosure, when it is detected that a person is sitting on a preset seat, a Bluetooth device possessed by the user sitting in the preset seat serves as a Bluetooth device to be configured with the permission of the vehicle interaction function, and by determining the distance between the Bluetooth device and a reference object corresponding to the preset seat, the Bluetooth device possessed by the user sitting in the preset seat is determined among multiple Bluetooth devices, as a target Bluetooth device, and the target Bluetooth device is configured with the permissions of the vehicle interaction function. In this way, once the user enters the vehicle cockpit and sits in the preset seat, the Bluetooth device possessed by the user can be immediately connected to the vehicle through the in-vehicle Bluetooth module, and the Bluetooth device possessed by the user can be accordingly configured with the permission of the vehicle interaction function, so as to allow the user to interact with the vehicle and provide the user with a good vehicle interaction experience.

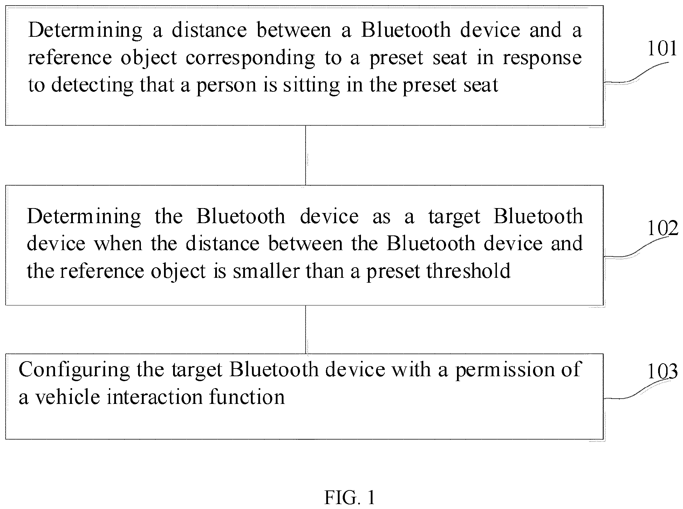

FIG. 1 illustrates a flow chart of steps of a vehicle interaction method according to an embodiment of the present disclosure . Referring to FIG. 1, and the method may specifically include steps as follows.

At Step 101, in response to detecting that a person is sitting on a preset seat, a distance between a Bluetooth device and a reference object corresponding to the preset seat is determined.

In an embodiment of the present disclosure, at least one seat may be provided in a cockpit of a vehicle. Depending upon the position where the seat is provided, different types of persons may sit on the seat. For example, the seat may be a seat for a driver, a seat for a co-driver, a seat for an adult passenger, or a seat for an infant passenger, etc., which is not limited in the present disclosure.

In an embodiment of the present disclosure, the Bluetooth device possessed by the user sitting in the preset seat can be allowed to connect to the vehicle through an in-vehicle Bluetooth module, and to be configured with the permissions of the vehicle's interaction functions. The preset seat may be all the seats in the cockpit, a seat for the driver in the cockpit, or seats for the driver and the co-driver in the cockpit, etc., which is not limited in the present disclosure.

In an embodiment of the present disclosure, when a person enters the vehicle, it can be detected whether a person is sitting in the preset seat. When it is detected that a person is sitting in the preset seat, distances between the multiple Bluetooth devices in the cockpit and a reference object corresponding to the preset seat can be determined. Thus, based on the distances between the Bluetooth devices and the reference object corresponding to the preset seat, the Bluetooth device possessed by the user sitting in the preset seat can be determined.

The Bluetooth device may be a mobile electronic device with Bluetooth that is possessed by the user and follows the user into the vehicle cockpit, and thus temporarily stays in the vehicle cockpit. For example, the Bluetooth device may be a Bluetooth-enabled mobile phone, a Bluetooth-enabled laptop, a Bluetooth-enabled smart watch or the like.

The reference object may be an object as a reference to determine whether the Bluetooth device is a Bluetooth device possessed by a user sitting in the preset seat. If the distance between the Bluetooth device and the reference object is relatively short, it can be regarded that the Bluetooth device is more likely to be the Bluetooth device possessed by the user sitting in the preset seat. A certain object or a certain position in the vehicle cockpit can be selected as the reference object according to needs.

For example, when the preset seat is a driver seat, the reference object may be a steering wheel. In the case that the preset seat is a rear left seat, the reference object may be the middle position of a lower edge of a rear left window.

At Step 102, the Bluetooth device is determined as a target Bluetooth device when the distance between the Bluetooth device and the reference object is smaller than a preset threshold.

In an embodiment of the present disclosure, if the distance between a Bluetooth device and the reference object is smaller than the preset threshold, it can be regarded that the distance between the Bluetooth device and the reference object is relatively short, and the Bluetooth device is more likely to be the Bluetooth device possessed by the user sitting in the preset seat, and thus this Bluetooth device can be determined as the target Bluetooth device.

According to actual needs, the preset threshold can be 10cm, 50cm, 1m, etc., which is not limited in the present disclosure.

At Step 103, the target Bluetooth device is configured with a permission of a vehicle interaction function.

In an embodiment of the present disclosure, the target Bluetooth device possessed by the user sitting in the preset seat can be configured with the permission of the vehicle interaction function. In this way, the target Bluetooth device can be connected to the vehicle through the in-vehicle Bluetooth module, and the target Bluetooth device can be used to interact with the vehicle within the scope of the permission.

The permission of the vehicle interaction function may be determined based on the personnel type corresponding to the preset seat according to actual needs. For example, if the preset seat is a seat for a driver, and the permission of the vehicle interaction function corresponding to the preset seat may be a permission to call in the vehicle, to connect to an in-vehicle display screen, to set a navigation route, and to allow Bluetooth device to control an in-vehicle equipment such as an air conditioner, an atmosphere lamp, etc. As another example, if the preset seat is a seat for a rear passenger, the permission of the vehicle interaction function corresponding to the preset seat may be a permission to connect to an in-vehicle audio equipment to play music, a permission to check a navigation route, and the like.

As an example of the present disclosure, the preset seat is a driver seat, and the reference object corresponding to the preset seat is a steering wheel. When it is detected that a person is sitting on the driver seat, the distances between multiple Bluetooth devices inside the vehicle and the steering wheel can be determined. Among the multiple Bluetooth devices, one Bluetooth-enabled mobile phone has a distance from the steering wheel smaller than the preset threshold, this Bluetooth-enabled mobile phone can serve as the target Bluetooth device and can be configured with the permission of the vehicle interaction function. Thus, the Bluetooth-enabled mobile phone can be connected to the vehicle through the in-vehicle Bluetooth module, and can interact with the vehicle to achieve interaction functions such as calling with an in-vehicle communication module, navigation route setting with the Bluetooth-enabled mobile phone, and file transfer with an in-vehicle system.

Through the vehicle interaction method according to the embodiments of the present disclosure, when it is detected that a person is sitting in the preset seat, the distance between the Bluetooth device and the reference object corresponding to the preset seat is determined, and when the distance between the Bluetooth device and the reference object is smaller than the preset threshold, the Bluetooth device is determined as a target Bluetooth device and the target Bluetooth device is configured with the permission of the vehicle interaction function. In this way, once a user enters the vehicle cockpit and sits in the preset seat, the Bluetooth device possessed by the user can be immediately connected to the vehicle through the in-vehicle Bluetooth module, and accordingly, the Bluetooth device possessed by the user can be configured with the permission of the vehicle interaction function, so as to allow the user to interact with the vehicle and provide the user with a good vehicle interaction experience.

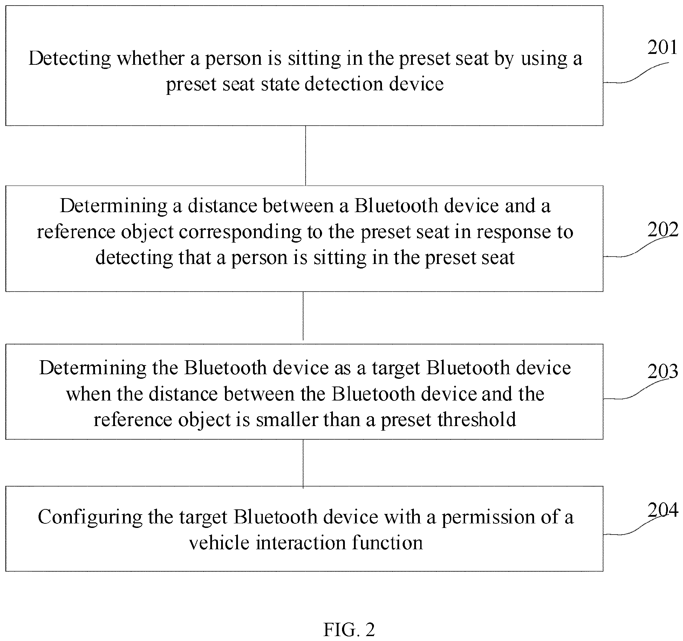

Reference is now made to FIG. 2. FIG. 2 is a flowchart of steps of a vehicle interaction method according to an embodiment of the present disclosure, the method being applied in a vehicle including at least one in-vehicle Bluetooth module.

In an embodiment of the present disclosure, the vehicle may include at least one in-vehicle Bluetooth module, and a Bluetooth device with Bluetooth function can be connected to the vehicle through the in-vehicle Bluetooth module and interact with the vehicle.

In an embodiment of the present disclosure, the in-vehicle Bluetooth module can be provided at any position in a vehicle cockpit, for example, a top center of the vehicle cockpit, a bottom center of the vehicle cockpit, a top of a front left door, a bottom of a rear right door, a center of a rear seat, which is not limited in the present disclosure.

In an embodiment of the present disclosure, at least one seat may be provided in the vehicle cockpit. Depending upon the position where the seat is provided, different types of persons may sit on the seat. For example, the seat may be a seat for a driver, a seat for a co-driver, a seat for an adult passenger, or a seat for an infant passenger, etc., which is not limited in the present disclosure.

Specifically, the method may include the following steps 201 to 204.

At step 201, it is detected whether a person is sitting on a preset seat by using any one of detection manners including a seat pressure detection, a seat belt insertion-removal detection, a headrest contact detection, and an image recognition detection.

In an embodiment of the present disclosure, the vehicle can detect whether there is a person sitting in the preset seat in the vehicle cockpit. Specifically, any one of the detection manners including the seat pressure detection, the seat belt insertion-removal detection, the headrest contact detection, and the image recognition detection, can be used to detect whether there is a person sitting in the preset seat in the vehicle cockpit.

In a specific implementation, when the detection manner of seat pressure detection is adopted to detect whether there is a person sitting in the preset seat in the vehicle cockpit, it can be determined whether a person is sitting in the preset seat by receiving a gravity detection signal transmitted by a seat gravity sensor, which can be provided inside the preset seat.

When the detection manner of image recognition detection is adopted to detect whether there is a person sitting in the preset seat in the vehicle cockpit, it can be determined whether a person is sitting in the preset seat by receiving an image of the preset seat collected by an image obtaining device provided inside the vehicle cockpit or an image containing the preset seat captured from the outside of the vehicle, and recognizing whether a person is sitting in the preset seat in the image. If the image obtaining device is disposed inside the vehicle cockpit, the image obtaining device can be disposed, based on needs, at the forefront of the vehicle cockpit, on the left side of the vehicle cockpit, on the right side of the vehicle cockpit, on the back of the seat, etc., which is not limited in the present disclosure.

When the detection manner of headrest contact detection is adopted to detect whether there is a person sitting in the preset seat in the vehicle cockpit, a contact sensing signal transmitted by a seat headrest contact detection device provided at a seat headrest can be received to determine whether a person is sitting in the preset seat.

When the detection manner of seat belt insertion-removal detection is adopted to detect whether there is a person sitting in the preset seat in the vehicle cockpit, an insertion-removal detection signal transmitted by a seat belt insertion-removal detection device provided at a bolt for the seat belt can be received to determine whether a person is sitting in the preset seat.

At Step 202, in response to detecting that a person is sitting in the preset seat, a distance between a Bluetooth device and a reference object corresponding to the preset seat is determined.

In an embodiment of the present disclosure, the Bluetooth device possessed by the user sitting in the preset seat is allowed to connect with the vehicle through the in-vehicle Bluetooth module, and is configured with the permission of the vehicle interaction function. The preset seat may be all the seats in the cockpit, a seat for the driver in the cockpit, or seats for the driver and the co-driver in the cockpit, etc., which is not limited in the present disclosure.

In an embodiment of the present disclosure, when a person enters the vehicle, it can be detected whether a person is sitting in the preset seat. When it is detected that a person is sitting in the preset seat, the distances between the multiple Bluetooth devices in the cockpit and the reference object corresponding to the preset seat can be determined. Thus, based on the distances between the Bluetooth devices and the reference object corresponding to the preset seat, the Bluetooth device possessed by the user sitting in the preset seat can be determined.

The Bluetooth device may be a mobile electronic device with Bluetooth that is possessed by a user and follows the user into the vehicle cockpit, and thus temporarily stays in the vehicle cockpit. For example, the Bluetooth device may be a Bluetooth-enabled mobile phone, a Bluetooth-enabled laptop, a Bluetooth-enabled smart watch or the like.

The reference object may be an object as a reference to determine whether the Bluetooth device is a Bluetooth device possessed by a user sitting in the preset seat. If the distance between the Bluetooth device and the reference object is relatively short, it can be regarded that the Bluetooth device is more likely to be the Bluetooth device possessed by the user sitting in the preset seat. A certain object or a certain position in the vehicle cockpit can be selected as the reference object according to needs.

For example, when the preset seat is a driver seat, the reference object may be a steering wheel. In the case that the preset seat is a rear left seat, the reference object may be the middle position of a lower edge of a rear left window.

In an embodiment of the present disclosure, the determining the distance between the Bluetooth device and the reference object corresponding to the preset seat in response to detecting that a person is sitting in the preset seat includes the following steps S 11-S 12.

At S 11, in response to detecting that a person is sitting in the preset seat, a distance between at least one in-vehicle Bluetooth module and the Bluetooth device is detected.

In an embodiment of the present disclosure, when a person enters the vehicle, the distance between at least one in-vehicle Bluetooth module and the Bluetooth device can be detected, such that a position where the Bluetooth device is located in the vehicle cockpit can be determined based on the distance between the Bluetooth module and the Bluetooth device.

In a specific implementation, the in-vehicle Bluetooth module may scan a Bluetooth signal transmitted by the Bluetooth device. Based on an intensity of the Bluetooth signal, the distance between the Bluetooth device and the in-vehicle Bluetooth module itself is determined, so as to detect the distance between the in-vehicle Bluetooth module and the Bluetooth device.

At S12, based on a location of the in-vehicle Bluetooth module is located and the distance between the at least one in-vehicle Bluetooth module and the Bluetooth device, the distance between the Bluetooth device and the reference object corresponding to the preset seat is determined.

In an embodiment of the present disclosure, based on a location of the in-vehicle Bluetooth module and the distance between the at least one in-vehicle Bluetooth module and the Bluetooth device, the distance between the Bluetooth device and the reference object corresponding to the preset seat can be determined. In this way, based on the distance between the Bluetooth device and the reference object corresponding to the preset seat, the Bluetooth device possessed by the user sitting in the preset seat can be determined.

In a specific implementation, both the location of the in-vehicle Bluetooth module and the location of the reference object can be known. After obtaining the distance between the at least one in-vehicle Bluetooth module and the Bluetooth device, the distance between the Bluetooth device and the reference object may be calculated from the distance between the in-vehicle Bluetooth module and the Bluetooth device based on the positional relationship between the in-vehicle Bluetooth module and the reference object.

If the location of the in-vehicle Bluetooth module is exactly the location of the reference object, then the distance between the Bluetooth device and the in-vehicle Bluetooth module at the location of the reference object is the distance between the Bluetooth device and the reference object.

If the location of the in-vehicle Bluetooth module is not the location of the reference object, the distance between the Bluetooth device and the reference object can be calculated based on the location of the reference object, the locations of at least two in-vehicle Bluetooth modules, and the distance between each of the at least two in-vehicle Bluetooth modules and the Bluetooth device.

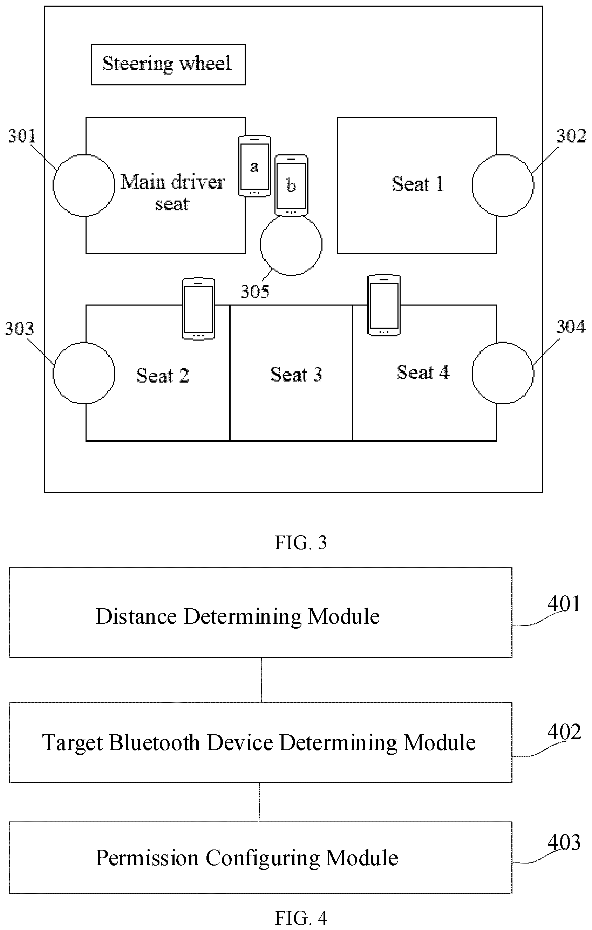

As an example of the present disclosure, FIG. 3 is a schematic diagram of a vehicle cockpit according to an embodiment of the present disclosure. The cockpit is provided with five seats, including a main driver seat, a seat **1,** a seat **2,** a seat **3,** and a seat **4.** The vehicle cockpit is further provided with five in-vehicle Bluetooth modules, i.e., an in-vehicle Bluetooth module **301** disposed on the left edge of the main driver seat, an in-vehicle Bluetooth module **302** disposed on the right edge of the seat **1,** an in-vehicle Bluetooth module **303** disposed on the left edge of the seat **2,** an in-vehicle Bluetooth module **304** disposed on the right edge of the seat **4,** and an in-vehicle Bluetooth module **305** disposed on the center of the five seats. The main driver seat is a preset seat, and a steering wheel is a reference object corresponding to the main driver seat. When it is detected that a person enters the vehicle and sits on the main driver seat, a Bluetooth device in the vehicle cockpit can be detected under the premise that the person enters the vehicle. In the case of detecting that there are a number of Bluetooth devices in the vehicle cockpit, a distance between each in-vehicle Bluetooth module and the Bluetooth devices can be detected, and based on a location of the in-vehicle Bluetooth module and the distance between the in-vehicle Bluetooth module and the Bluetooth device, a distance between the Bluetooth device and the steering wheel is determined.

In an embodiment of the present disclosure, the step of determining the distance between the Bluetooth device and the reference object corresponding to the preset seat in response to detecting that a person is sitting in the preset seat includes the following steps S21 to S22.

At S21, in response to detecting that a person is sitting in the preset seat, the quantity of Bluetooth devices in the vehicle is determined.

In an embodiment of the present disclosure, when it is detected that a person is sitting in the preset seat, the quantity of Bluetooth devices in the vehicle can be detected to determine whether the Bluetooth device can be directly connected and configured with the permission of vehicle interaction function.

At S22, when the quantity of Bluetooth devices in the vehicle is greater than one, the distance between each of the Bluetooth devices and the reference object corresponding to the preset seat is determined.

In an embodiment of the present disclosure, if the quantity of Bluetooth devices in the vehicle cockpit is greater than one, it is impossible to directly determine which Bluetooth device is the one possessed by the user sitting in the preset seat. Therefore, the distance between each of the Bluetooth devices and the reference object corresponding to the preset seat can be determined, so as to determine the Bluetooth device possessed by the user sitting in the preset seat.

In an embodiment of the present disclosure, if the quantity of Bluetooth devices in the vehicle cockpit is one, the Bluetooth device can be regarded as the Bluetooth device possessed by the user sitting in the preset seat, such that this Bluetooth device can be directly determined as the target Bluetooth device and configured with the permission of the vehicle interaction function.

In an embodiment of the present disclosure, if there is no Bluetooth device existing inside the vehicle cockpit, there is no need to connect with the Bluetooth device, and there is no need to perform the step of determining the distance between the Bluetooth device and the reference object corresponding to the preset seat.

At Step 203, the Bluetooth device is determined as a target Bluetooth device when the distance between the Bluetooth device and the reference object is smaller than a preset threshold.

In an embodiment of the present disclosure, if the distance between a Bluetooth device and the reference object is smaller than a preset threshold, it can be regarded that the distance between the Bluetooth device and the reference object is relatively short, and the Bluetooth device is more likely to be the Bluetooth device possessed by the user sitting in the preset seat, and thus this Bluetooth device can be determined as the target Bluetooth device.

According to actual needs, the preset threshold can be 10cm, 50cm, 1m, etc., which is not limited in the present disclosure.

In an embodiment of the present disclosure, the step of determining the Bluetooth device as a target Bluetooth device when the distance between the Bluetooth device and the reference object is smaller than a preset threshold includes the following steps S31 to S35.

At S31, it is determined whether there is more than one Bluetooth device whose distance from the reference object is smaller than the preset threshold.

In an embodiment of the present disclosure, since the space in the vehicle cockpit is usually relatively narrow, the Bluetooth devices possessed by users sitting on different seats may be relatively close to each other. Therefore, there may be more than one Bluetooth device whose distance from the reference object is smaller than the preset threshold. However, the Bluetooth devices whose distances from the reference object are smaller than the preset threshold include those possessed by the users not sitting in the preset seat.

As an example of the present disclosure, as shown in FIG. 3, the user sitting on the main driver seat places a Bluetooth device a between the main driver seat and the seat 1, and the user sitting on the seat 1 also places a Bluetooth device b between the main driver seat and the seat 1. Thus, the Bluetooth device a and the Bluetooth device b are close to each other, and a distance between the Bluetooth device a and the steering wheel as the reference object and a distance between the Bluetooth device b and the steering wheel as the reference object are both smaller than the preset threshold.

Thus, it can be determined whether there is more than one Bluetooth device whose distance from the reference object is smaller than the preset threshold, so as to determine whether it is necessary to further determine the Bluetooth device possessed by the user sitting in the preset seat.

At S32, when there is more than one Bluetooth device whose distance from the reference object is smaller than the preset threshold, biometric identification information of the user located in the preset seat is obtained.

In an embodiment of the present disclosure, in the case that there is more than one Bluetooth device whose distance from the reference object is smaller than the preset threshold, since a Bluetooth device that is not possessed by the user sitting in the preset seat may exist among the Bluetooth devices whose distances from the reference object are smaller than the preset threshold, biometric identification information of the user located in the preset seat can be obtained to determine the Bluetooth device possessed by the user sitting on the seat by using the biometric identification information.

The biometric identification information may be fingerprint information, face information, iris information, voice feature information, etc., which is not limited in the present disclosure.

At S33, an unlock request is generated by using the biometric identification information.

In an embodiment of the present disclosure, the biometric identification information may be used to try unlocking the Bluetooth device, so as to determine whether the Bluetooth device is a Bluetooth device possessed by a user sitting in the preset seat. Thus, the biometric identification information can be used to generate an unlock request. The unlock request may be used to request the Bluetooth device to unlock a device lock using the biometric identification information.

At S34, the unlock request is transmitted to the more than one Bluetooth device whose distance from the reference object is smaller than the preset threshold.

In an embodiment of the present disclosure, the unlock request may be transmitted to all the Bluetooth devices whose distances from the reference object are smaller than the preset threshold respectively, so as to determine the Bluetooth device possessed by the user sitting in the preset seat among the Bluetooth devices whose distances from the reference object are smaller than the preset threshold respectively.

At S35, one of the more than one Bluetooth device that is successfully unlocked in response to the unlock request is determined as the target Bluetooth device.

In an embodiment of the present disclosure, if a Bluetooth device can respond to the unlock request to unlock the device lock, and return a response message of successful unlocking to the vehicle, the Bluetooth device can be regarded as the Bluetooth device possessed by the user sitting in the preset seat, and thus determined as the target Bluetooth device. Therefore, the vehicle can automatically identify the Bluetooth device possessed by the user sitting in the preset seat among multiple Bluetooth devices without the need for the user to setup the Bluetooth connection himself, so that the user can have a better vehicle riding experience.

At Step 204, the target Bluetooth device is configured with a permission of a vehicle interaction function.

In an embodiment of the present disclosure, the permission of the vehicle interaction function may be configured for the target Bluetooth device possessed by the user sitting in the preset seat. Therefore, the target Bluetooth device can be connected to the vehicle through an in-vehicle Bluetooth module, and the target Bluetooth device can be used to interact with the vehicle within the scope of the permission.

The permission of the vehicle interaction function may be determined based on the personnel type corresponding to the preset seat according to actual needs. For example, if the preset seat is a seat for a driver, and the permission of the vehicle interaction function corresponding to the preset seat may be a permission to call in the vehicle, to connect to an in-vehicle display screen, to set a navigation route, and to allow Bluetooth device to control an in-vehicle equipment such as an air conditioner, an atmosphere lamp, etc. As another example, if the preset seat is a seat for a rear passenger, the permission of the vehicle interaction function corresponding to the preset seat may be a permission to connect to an in-vehicle audio equipment to play music, a permission to check a navigation route, and the like.

In an embodiment of the present disclosure, the vehicle interaction function includes an in-vehicle call function.

Specifically, the vehicle may take over the call function of the target Bluetooth device, for answering or hanging up the incoming call of the target Bluetooth device, and may control the target Bluetooth device to make a call. During a call, it is also possible to implement functions such as playing the voice of the conversation party through a preset in-vehicle audio equipment, receiving the user's voice through a preset in-vehicle microphone, and transmitting the user's voice to the conversation party through the target Bluetooth device.

The method further includes steps S41 to S42.

At S41, it is determined whether there is a person sitting in the preset seat in response to receiving a call request from the target Bluetooth device.

In an embodiment of the present disclosure, the target Bluetooth device, after receiving an incoming call, may transmit a call request to the vehicle through the in-vehicle Bluetooth module. Therefore, the vehicle can receive the call request from the target Bluetooth device and learn that the target Bluetooth device receives an incoming call.

According to actual needs, in the vehicle cockpit, the vehicle, after receiving the call request from the target Bluetooth device, can display an incoming call reminder via a preset in-vehicle display screen, play an incoming call ringtone via an audio player, allow a preset atmosphere lamp to flash, and at least one of other notification manners, to remind the user that an incoming call is currently received.

In an embodiment of the present disclosure, the user sitting in the preset seat may temporarily leave the vehicle. If the user takes the target Bluetooth device away from the vehicle cockpit when leaving the vehicle, a Bluetooth connection between the target Bluetooth device and the vehicle may be automatically disconnected due to an effective distance limitation of the in-vehicle Bluetooth module. At this time, if an incoming call is received, the target Bluetooth device itself can play the incoming call ringtone, vibrate, etc., to remind the user to answer the call. If the user does not take the target Bluetooth device away from the vehicle cockpit when leaving the vehicle, the vehicle can maintain the connection with the target Bluetooth device, and the user may not be able to notice the incoming call due to a certain distance between the user and the target Bluetooth device.

Thus, in the case of receiving the call request from the target Bluetooth device, it can be determined whether a person is sitting in the preset seat, so as to determine whether the user possessing the target Bluetooth device can notice the incoming call. Specifically, a preset seat gravity sensor and/or a preset image obtaining device may be used to detect whether a person is sitting in the preset seat.

At S42, when there is no person sitting in the preset seat, an incoming call reminder operation is performed, the incoming call reminder operation including playing a preset sound by using a preset audio player, and/or controlling a preset car lamp to flash.

In an embodiment of the present disclosure, when there is no person sitting in the preset seat, it means that the user possessing the target Bluetooth device may not be able to notice the incoming call currently. Thus, the incoming call reminder operation can be performed to remind the user that the target Bluetooth device is currently receiving an incoming call.

The incoming call reminder operation includes playing a preset sound by using a preset audio player, and/or controlling a preset car lamp to flash.

Specifically, the preset audio player may be provided inside the vehicle cockpit, and/or outside the vehicle. In the case that the preset audio player is provided inside the vehicle cockpit, the preset audio player can increase the volume, such that the user outside the vehicle can notice the incoming call reminder. In the case that the preset audio player is provided outside the vehicle, the preset audio player can play the preset sound normally, and the user outside the vehicle can notice the incoming call reminder. The preset sound may be a preset sound for reminding the reception of an incoming call.

Specifically, the preset car lamp may be an atmosphere lamp provided inside the vehicle cockpit, and/or a signal lamp provided outside the vehicle. Through a specific flashing manner, the preset car lamp can remind a user outside the vehicle that the target Bluetooth device is currently receiving an incoming call.

In an embodiment of the present disclosure, the vehicle interaction function includes a message push function.

The method further includes step S51.

At S51, a push message is received from the target Bluetooth device, and the push message is displayed on a preset in-vehicle display screen.

In an embodiment of the present disclosure, the Bluetooth device can receive a push message. The push message may come from an application program in the Bluetooth device, such as a chat program, a weather program, a game program, a news program, a social platform program, etc. Generally, after receiving the push message, the Bluetooth device can display the push message on the display screen of the Bluetooth device. However, when the user is located in the vehicle cockpit, it may be inconvenient to view the content displayed on the Bluetooth device with a smaller display size.

Thus, the vehicle interaction function may include a message push function. After the Bluetooth device receives the push message, the push message can be forwarded to the vehicle through the in-vehicle Bluetooth module, so that the vehicle can receive the push message from the target Bluetooth device, and displays the push message on the in-vehicle display screen. The in-vehicle display screen may normally have a larger size than that of a display screen of the Bluetooth device, and can be provided at a position that is easy for the user to observe, so that the user can more easily view the push message.

In an embodiment of the present disclosure, the vehicle interaction function includes a vehicle control function.

The method may further include steps S61 to S62.

At S61, vehicle control information is received from the target Bluetooth device.

In an embodiment of the present disclosure, after the target Bluetooth device is connected to the vehicle, the target Bluetooth device can be used to control the vehicle system functions. Therefore, in the case that the user wishes to control the vehicle system functions, the target Bluetooth device can be used to transmit vehicle control information. In this way, the vehicle can receive the vehicle control information from the target Bluetooth device.

At S62, a vehicle system function is controlled by using the vehicle control information.

In an embodiment of the present disclosure, the vehicle control information can be received, and the vehicle control information can be used to adjust the corresponding vehicle system functions for the user to achieve the control of the vehicle system functions, so that the vehicle system function can control the vehicle.

As an example of the present disclosure, the vehicle control information may be adjusting a temperature of an air conditioner, playing music, setting navigation, adjusting the window, opening the door, etc. The vehicle control information transmitted by the target Bluetooth device can be received, and the corresponding vehicle system function can be controlled based on the vehicle control information, such that the user can adjust the temperature of the air conditioner, play music, set navigation, adjust the window, open the doors, etc., thereby achieving the control of the vehicle.

In an embodiment of the present disclosure, the method may further include steps S71 to S73.

At S71, an image of a person nearby the vehicle is obtained.

In an embodiment of the present disclosure, when the vehicle detects that a vehicle door is opened or a vehicle lock is unlocked, it can be regarded that there may be a person who need to ride in the vehicle. At this time, before the person enters the vehicle cockpit, an image of the person nearby the vehicle who may be ready to board the vehicle can be obtained, so as to confirm the identity of the person before the person enters the vehicle cockpit.

At S72, it is determined whether the image of the person matches a user image, in which the user image is an image of a user corresponding to the target Bluetooth device, and the user image has a corresponding relation with device identification information of the target Bluetooth device.

In an embodiment of the present disclosure, after the vehicle is successfully connected to the target Bluetooth device, the device identification information of the target Bluetooth device can be obtained, and the user image of the user corresponding to the target Bluetooth device can be obtained, in order to establish a correspondence between the user image and the target Bluetooth device. In this way, when the user ride in the vehicle in the future, the target Bluetooth device can be more quickly connected and configured with the permission of the vehicle interaction function, thereby improving the user's riding experience.

The device identification information may be used to determine the identity of the target Bluetooth device. For example, the device identification information may be a device identification code, user identity information, hardware identification information, and the like.

The user image may include characteristic information of the user, for example, face, fingerprint, iris, etc. Thus, the user image can be used to identify the user.

In an embodiment of the present disclosure, after obtaining the image of the person nearby the vehicle, it can be determined whether the image of the person matches the user image, so as to determine whether the person nearby the vehicle have ever taken the vehicle and whether the Bluetooth device possessed by the person has ever been connected to the vehicle.

At S73, when the image of the person matches the user image, the target Bluetooth device is searched for by using the device identification information corresponding to the user image, and the target Bluetooth device is configured with the permission of the vehicle interaction function.

In an embodiment of the present disclosure, when the image of the person matches the user image, it can be regarded that the person corresponding to the image of the person is the user who has ever taken the vehicle and possess the Bluetooth device that has ever been connected to the vehicle. In this case, the device identification information can be used to search for the target Bluetooth device that the user possesses and has been connected to the vehicle, and the target Bluetooth device can be connected and configured with the permission of the vehicle interaction function. Therefore, before a person enters the vehicle cockpit, the person's identity can be confirmed, and the target Bluetooth device can be connected, such that the target Bluetooth device can be connected and configured with the permission of the vehicle interaction function more quickly, thereby improving the user's riding experience.

The permission of the vehicle interaction function configured for the target Bluetooth device can be the same permission as the previous vehicle ride according to actual needs, or the permission of the vehicle interaction function can be determined again according to the preset seat on which the user is sitting, which is not limited in the present disclosure.

Through the vehicle interaction method of any of the embodiments of the present disclosure, a preset seat gravity sensor and/or a preset image obtaining device are used to detect whether a person is sitting in the preset seat. When it is detected that a person is sitting in the preset seat, the distance between a Bluetooth device and the reference object corresponding to the preset seat is determined. When the distance between a Bluetooth device and the reference object is smaller than the preset threshold, the Bluetooth device is determined as a target Bluetooth device, and the target Bluetooth device is configured with the permission of the vehicle interaction function. In this way, once a user enters the vehicle cockpit and sits in the preset seat, a Bluetooth device possessed by the user can be immediately connected to the vehicle through the in-vehicle Bluetooth module, and the Bluetooth device possessed by the user can be accordingly configured with the permission of the vehicle interaction function, so as to allow the user to interact with the vehicle and provide the user with a good vehicle interaction experience.

It should be noted that, for the sake of simple description, the embodiments of the method are all expressed as a series of action combinations, but those skilled in the art should know that the embodiments of the present disclosure are not limited by the described sequence of actions, because some steps can be performed in other sequence or performed simultaneously according to the embodiments of the present disclosure. Secondly, those skilled in the art should also know that the embodiments described in the specification are all preferred embodiments, and the actions involved are not necessarily required by the embodiments of the present disclosure.

FIG. 4 is a structural block diagram of a vehicle according to an embodiment of the present disclosure. Referring to FIG. 4, the vehicle may specifically include the following modules:

a distance determining module **401,** configured to determine a distance between a Bluetooth device and a reference object corresponding to a preset seat in response to detecting that a person is sitting in the preset seat;
a target Bluetooth device determining module **402,** configured to determine the Bluetooth device as a target Bluetooth device when the distance between the Bluetooth device and the reference object is smaller than a preset threshold; and
a permission configuring module **403,** configured to configure the target Bluetooth device with a permission of a vehicle interaction function

In an embodiment of the present disclosure, the vehicle includes at least one in-vehicle Bluetooth module.

The distance determining module **401** includes:
a module distance determining sub-module configured to detect a distance between the at least one in-vehicle Bluetooth module and the Bluetooth device when it is detected that a person is sitting on a preset seat; and
a reference object distance determining sub-module configured to determine the distance between the Bluetooth device and the reference object corresponding to the preset seat based on a location of the in-vehicle Bluetooth module and the distance between the at least one in-vehicle Bluetooth module and the Bluetooth device.

In an embodiment of the present disclosure, the vehicle further includes a detecting module configured to detect whether a person is sitting in the preset seat by using any one of detection manners including a seat pressure detection, a seat belt insertion-removal detection, a headrest contact detection, and an image recognition detection.

In an embodiment of the present disclosure, the distance determining module **401** includes:
a quantity detecting sub-module configured to detect the quantity of Bluetooth devices in the vehicle in response to detecting that a person is sitting in the preset seat; and
a distance determining sub-module configured to determine the distance between each of the Bluetooth devices and the reference object corresponding to the preset seat when the quantity of Bluetooth devices in the vehicle is greater than one.

In an embodiment of the present disclosure, the target Bluetooth device determining module **402** includes:
a device quantity determining sub-module configured to determine whether there is more than one Bluetooth device whose distance from the reference object is smaller than the preset threshold;
a recognition image obtaining sub-module configured to obtain biometric identification information of a user located in the preset seat when there is more than one Bluetooth device whose distance from the reference object is smaller than the preset threshold;
a request generating sub-module configured to generate an unlock request by using the biometric identification information;
a request transmitting sub-module configured to transmit the unlock request to the Bluetooth devices whose distances from the reference object are smaller than the preset threshold; and
a target Bluetooth device determining sub-module configured to determine one of the Bluetooth devices that is successfully unlocked in response to the unlock request as the target Bluetooth device.

In an embodiment of the present disclosure, the vehicle interaction function includes an in-vehicle call function, and the vehicle further includes:
a call request receiving module configured to determine whether there is a person sitting in the preset seat in response to receiving a call request from the target Bluetooth device; and
an incoming call reminder module configured to perform an incoming call reminder operation when there is no person sitting in the preset seat, in which the incoming call reminder operation includes playing a preset sound by using a preset audio player, and/or controlling a preset car lamp to flash.

In an embodiment of the present disclosure, the vehicle interaction function includes a message push function, and the vehicle further includes: a message push module configured to receive a push message from the target Bluetooth device, and display the push message on a preset in-vehicle display screen.

In an embodiment of the present disclosure, the vehicle interaction function includes a vehicle control function, and the vehicle further includes:
a control information receiving module configured to receive vehicle control information from the target Bluetooth device; and
an in-vehicle control module configured to control a vehicle system function by using the vehicle control information.

In an embodiment of the present disclosure, the vehicle further includes:
a personnel image obtaining module configured to obtain an image of a person nearby the vehicle using a preset image obtaining device;
an image matching module configured to determine whether the image of the person matches a user image which is an image of a user corresponding to the target Bluetooth device, and has a corresponding relation with device identification information of the target Bluetooth device; and
a searching module configured to search for the target Bluetooth device by using the device identification information corresponding to the user image and configure the target Bluetooth device with the permission of the vehicle interaction function when the image of the person matches the user image.

The embodiments of the device are basically similar to the embodiments of the method, the description thereof is relatively simple, and the relevant parts can refer to the parts of the description of the embodiments of the method.

An embodiment of the present disclosure further provides a vehicle, including one or more processors, and one or more machine-readable media having instructions stored thereon. The instructions, when executed by the one or more processors, cause the vehicle to implement the method according to any of the embodiments of the present disclosure.

An embodiment of the present disclosure further provides one or more machine-readable media having instructions stored thereon. The instructions, when executed by one or more processors, cause the one or more processors to implement the method according to any of the embodiments of the present disclosure.

The various embodiments in this specification are described in a progressive manner, and each embodiment focuses on the differences from other embodiments, and the same or similar parts between the various embodiments can refer to each other.

Those skilled in the art should understand that the embodiments of the present disclosure may be provided as a method, an apparatus, or a computer program product. Therefore, the embodiments of the present disclosure may adopt the form of an embodiment of complete hardware, an embodiment of complete software, or an embodiment combining software and hardware. In addition, the embodiments of the present disclosure may be in the form of computer program products implemented on one or more computer-usable storage media (including but not limited to disk storage, CD-ROM, optical storage, etc.) containing computer-usable program codes.

The embodiments of the present disclosure are described with reference to flowcharts and/or block diagrams of the methods, terminal devices (systems), and computer program products according to the embodiments of the present disclosure. It should be understood that each process and/or block in the flowchart and/or block diagram, and the combination of processes and/or blocks in the flowchart and/or block diagram can be realized by computer program instructions. These computer program instructions can be provided to the processors of general-purpose computers, special-purpose computers, embedded processors, or other programmable data processing terminal devices to produce a machine. Thus, the instructions executed by the processor of the computer or other programmable data processing terminal device produce means for exerting the functions specified in one or more processes in the flowchart and/or one or more blocks in the block diagram.

These computer program instructions can also be stored in a computer-readable memory that can guide a computer or other programmable data processing terminal device to work in a specific manner, so that the instructions stored in the computer-readable memory generate instructions generate an article of manufacture including an instruction device, which implements the functions specified in one or more processes in the flowchart and/or one or more blocks in the block diagram.

These computer program instructions can also be loaded on a computer or other programmable data processing terminal devices, so that a series of operation steps are executed on the computer or other programmable terminal devices to generate computer-implemented processing. Thus, the instructions executed on the computer or other programmable terminal devices provide steps for implementing functions specified in one or more processes in the flowchart and/or one or more blocks in the block diagram.

Although the preferred embodiments of the present disclosure have been described above, those skilled in the art can make additional changes and modifications to these embodiments once they learn the basic creative concept. Therefore, the appended claims are intended to be interpreted as including the preferred embodiments and all changes and modifications falling within the scope of the embodiments of the present disclosure.

Finally, It should be further noted that, in the present disclosure, relational terms such as "first" and "second" are merely used to distinguish one entity or operation from another entity or operation, and do not necessarily require or imply any actual relationship or order between these entities or operations. Moreover, the terms "comprise", "include", or any other variants thereof are intended to cover non-exclusive inclusion, and thus a process, method, article, or terminal device including a series of elements includes other elements that are not explicitly listed in addition to these specified elements, or further include the elements inherent to this process, method, article, or terminal device. Without specific limitations, the element defined by the expression "including a..." does not exclude the existence of other identical elements in the process, method, article, or terminal device that includes this element.

The vehicle interaction method and the vehicle provided by the present disclosure are described in detail above. In the specification, the principle and implementation of the present disclosure are described by means of specific examples. The description of the above embodiments is merely used to help understand the method and pivotal concept of the present disclosure. At the same time, those skilled in the art, based on the concept of the present disclosure, can make changes to the specific implementation and scope of application. In summary, the specification should not be construed as a limitation of the present disclosure.

## Claims

1. A vehicle interaction method, comprising:
determining a distance between a Bluetooth device and a reference object corresponding to a preset seat in response to detecting that a person is sitting in the preset seat;
determining the Bluetooth device as a target Bluetooth device when the distance between the Bluetooth device and the reference object is smaller than a preset threshold; and
configuring the target Bluetooth device with a permission of a vehicle interaction function.

2. The method according to claim 1, further comprising:
detecting whether the person is sitting in the preset seat by using any one of detection manners comprising a seat pressure detection, a seat belt insertion-removal detection, a headrest contact detection, and an image recognition detection.

3. The method according to claim 1, wherein said determining the distance between the Bluetooth device and the reference object corresponding to the preset seat in response to detecting that the person is sitting in the preset seat comprises:
detecting the quantity of Bluetooth devices in the vehicle in response to detecting that the person is sitting in the preset seat; and
when the quantity of Bluetooth devices in the vehicle is greater than one, determining the distance between each of the Bluetooth devices and the reference object corresponding to the preset seat.

4. The method according to claim 1, wherein said determining the Bluetooth device as the target Bluetooth device when the distance between the Bluetooth device and the reference object is smaller than the preset threshold comprises:
determining whether there is more than one Bluetooth device whose distance from the reference object is smaller than the preset threshold;
when there is more than one Bluetooth device whose distance from the reference object is smaller than the preset threshold, obtaining biometric identification information of a user located in the preset seat;
generating an unlock request by using the biometric identification information;
transmitting the unlock request to the more than one Bluetooth device whose distance from the reference object is smaller than the preset threshold; and
determining one of the more than one Bluetooth device, which is successfully unlocked in response to the unlock request, as the target Bluetooth device.

5. The method according to claim 1, wherein the vehicle interaction function comprises an in-vehicle call function, and
the method further comprises:
determining whether there is a person sitting in the preset seat in response to receiving a call request from the target Bluetooth device; and
when there is no person sitting in the preset seat, performing an incoming call reminder operation, wherein the incoming call reminder operation comprises playing a preset sound by using a preset audio player, and/or controlling a preset car lamp to flash.

6. The method according to claim 1, wherein the vehicle interaction function comprises a message push function, and
the method further comprises:
receiving a push message from the target Bluetooth device, and displaying the push message on a preset in-vehicle display screen.

7. The method according to claim 1, wherein the vehicle interaction function comprises a vehicle control function, and
the method further comprises:
receiving vehicle control information from the target Bluetooth device; and
controlling a vehicle system function by using the vehicle control information.

8. The method according to claim 1, further comprising:
obtaining an image of a person nearby the vehicle;
determining whether the image of the person matches a user image, wherein the user image is an image of a user corresponding to the target Bluetooth device, and the user image has a corresponding relation with device identification information of the target Bluetooth device; and
when the image of the person matches the user image, searching for the target Bluetooth device by using the device identification information corresponding to the user image, and configuring the target Bluetooth device with the permission of the vehicle interaction function.

9. A vehicle, comprising:
a distance determining module configured to determine a distance between a Bluetooth device and a reference object corresponding to a preset seat in response to detecting that a person is sitting in the preset seat;
a target Bluetooth device determining module configured to determine the Bluetooth device as a target Bluetooth device when the distance between the Bluetooth device and the reference object is smaller than a preset threshold; and
a permission configuring module configured to configure the target Bluetooth device with a permission of a vehicle interaction function.

10. A vehicle, comprising
one or more processors; and
one or more machine-readable media having instructions stored thereon, wherein the instructions, when executed by the one or more processors, cause the vehicle to implement the method according to any of claims 1 to 8.

11. One or more machine-readable media having instructions stored thereon, wherein the instructions, when executed by one or more processors, cause the one or more processors to implement the method according to any of claims 1 to 8.
